# EUROPEAN PATENT APPLICATION

(11) **EP 1 526 484 A2**
(43) Date of publication of application: **27.04.2005**
(21) Application number: 04256150.6
(22) Date of filing: 05.10.2004
(51) Int. Cl.: G07F 9/10, G07F 11/44

(54) **Vending machine with remote controlled lid lock**

(30) Priority: 21.10.2003 CA 2445935
(71) Applicant: Beaver Machine Corporation, Newmarket, Ontario L3Y 7V1 (CA)
(72) Inventor: Schwarzli, Josef W., R.R No 4 Stouffville Ontario L4A 7X5 (CA)
(74) Representative: Pratt, Richard Wilson

(57) **Abstract**

A bulk vender (10) having a merchandise bin (12) with a lockable lid (30) that can be unlocked using a remote control (4). Preferably the locking mechanism releases responsive to an authorization code provided by a remote control transmitter, so that each operator is able to access the contents of their own bulk venders only. The lid (30) may be spring loaded, so that when the locking mechanism is released the lid automatically opens slightly, providing a visual indication that the lid has been unlatched and facilitating its removal by service personnel.

## Description

### Field of the Invention

This invention relates to vending machines. In particular, this invention relates to a bulk vender having a merchandise bin with a lockable lid.

### Background of the Invention

In a typical bulk vender a transparent "globe" or merchandise bin is seated over a hopper containing a dispensing wheel, which is in turn seated on a housing defining secure compartment. The dispensing wheel has product carriers or recesses that convey product to a dispensing opening (not shown) as the coin mechanism is rotated. Product stored in the merchandise bin is thus dispensed to the user through a dispensing chute which is contained within the secure compartment along with cash box for collecting deposited coins.

The entire vender assembly is locked together by a center rod that extends between a base and the lid of the merchandise compartment, which are typically formed by metal casting (for example from zinc). The bottom end of the center rod threadedly engages the base, and the top end of the center rod forms an anchoring member for locking the lid using a cylinder lock that can be rotated to threadedly engage (or disengage from) the center rod only when the required key is in the lock.

The manner in which the lid is locked to the merchandise bin is very important, because removal of the lid allows access to the entire interior of the vender. Removal of the lid provides immediate access to merchandise stored in the merchandise bin, but it also allows removal of the hopper/globe assembly which permits access to the secure compartment in which coins are accumulating. To avoid losses due to theft the lid must seal against the globe tightly and securely, to resist being pried off. Thus, the cylindrical locks used in prior art venders to engage the lid to the center rod are rotated numerous times in order to maximize the number of threads engaging the lock to the center rod and thus provide a tight, secure threaded engagement. As such, removing and replacing the cylindrical lock during servicing of the vender takes a considerable amount of time. For service personnel on a busy route, this significantly limits the number of venders that can be serviced in a given time interval.

furthermore, there are a limited number of key configurations available to operate such cylindrical locks, so the likelihood is that a key used to service venders owned by one operator will also operate at least some venders owned by other operators. This can also lead to security issues.

It would accordingly be advantageous to provide a bulk vender with a lid that locks to the vender tightly and securely, but that can be unlocked and removed in a very short time. It would further be advantageous to provide a locking mechanism for a bulk vender that has a virtually unlimited number of key or code configurations, so that it can only be unlocked by the operator of that particular vender.

### Summary of the Invention

One aspect of the present invention provides a bulk vender having a merchandise bin with a lockable lid that can be unlocked using a remote control transmitter. The unlocking operation is thus almost instantaneous, which over a plurality of service operations results in a substantial time savings. In the preferred embodiment the locking mechanism releases responsive to an authorization code provided by a remote control transmitter, so that each operator is able to access the contents of their own bulk venders only.

In the preferred embodiment the lockable lid is spring loaded, so that when the locking mechanism is released the lid automatically opens slightly, providing a visual indication that the lid has been unlatched and facilitating its removal by service personnel.

The present invention thus provides a bulk vender having a merchandise bin with a removable lid and an anchoring member fixed in relation to the merchandise bin, comprising an engaging member fixed to the lid and actuated by a solenoid, for engaging the anchoring member when the solenoid is in one of a quiescent or an activated condition and disengaging from the anchoring member when the solenoid is in the other of the quiescent or the activated condition, a power source for energizing the solenoid, and a receiver for connecting the power source to the solenoid or disconnecting the power source from the solenoid responsive to a signal from a transmitter, whereby when the receiver recognizes a signal from the transmitter the solenoid is switched to disengage the engaging mechanism from the anchoring member.

The present invention further provides a removable lid for a bulk vender having a merchandise bin, comprising an engaging member fixed to the lid and actuated by a solenoid, for engaging an anchoring member disposed in the merchandise bin when the solenoid is in one of a quiescent or an activated condition and disengaging from the anchoring member when the solenoid is in the other of the quiescent or the activated condition, a power source for energizing the solenoid, and a receiver for connecting the power source to the solenoid or disconnecting the power source from the solenoid responsive to a signal from a transmitter, whereby when the receiver recognizes a signal from the transmitter the solenoid is switched to disengage the engaging mechanism from the anchoring member.

The present invention further provides a lock for a bulk vender having a merchandise bin with a removable lid, comprising an engaging member fixed to the lid and actuated by a solenoid, for engaging an anchoring member disposed in the merchandise bin when the solenoid is in one of a quiescent or an activated condition and disengaging from the anchoring member when the solenoid is in the other of the quiescent or the activated condition, a power source for energizing the solenoid, and a receiver for connecting the power source to the solenoid or disconnecting the power source from the solenoid responsive to a signal from a transmitter, whereby when the receiver recognizes a signal from the transmitter the solenoid is switched to disengage the engaging mechanism from the anchoring member.

### Brief Description of the Drawings

In drawings which illustrate by way of example only a preferred embodiment of the invention,
Figure 1 is a perspective view of a bulk vender embodying the invention.

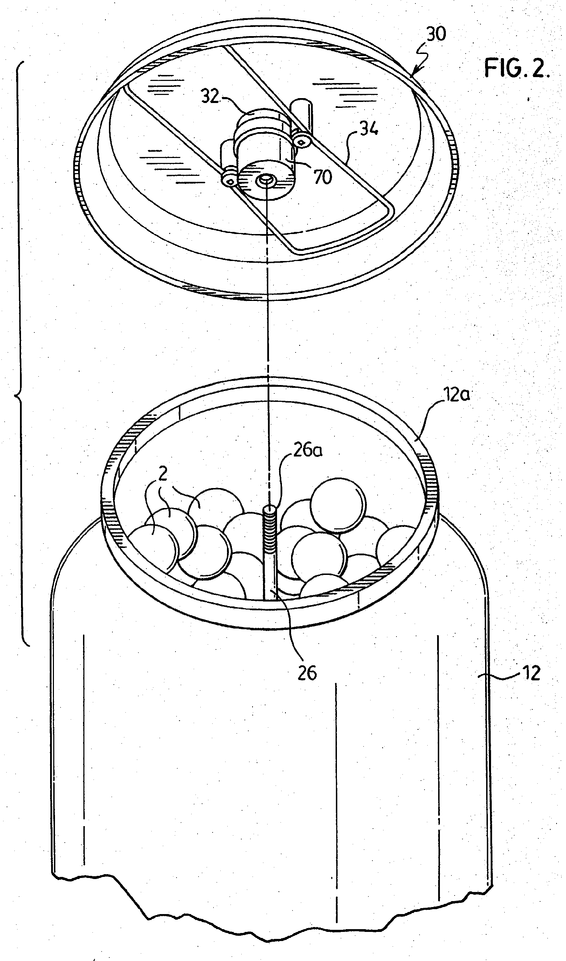

Figure 2 is a partial perspective view of the vender of Figure 1 showing the lid removed.
Figure 3 is a cross section of the locking mechanism in the vender of Figure 1 in a release position.
Figure 4 is a cross section of the locking mechanism of Figure 3 in an engaged position.
Figures 5A and 5B are enlarged perspective views of a first preferred engaging mechanism, in the engaged and released positions, respectively.
Figure 6 is a cross sectional elevation of the engaging mechanism of Figures 5A and 5B.
Figure 7 is a top plan view of the engaging mechanism of Figures 5A and 5B.
Figures 8A and 8B are cross sectional elevational views of a second preferred engaging mechanism, in the engaged and release positions, respectively.
Figure 9 is an exploded view of the engaging mechanism of Figures 8A and 88.

### Detailed Description of the Invention

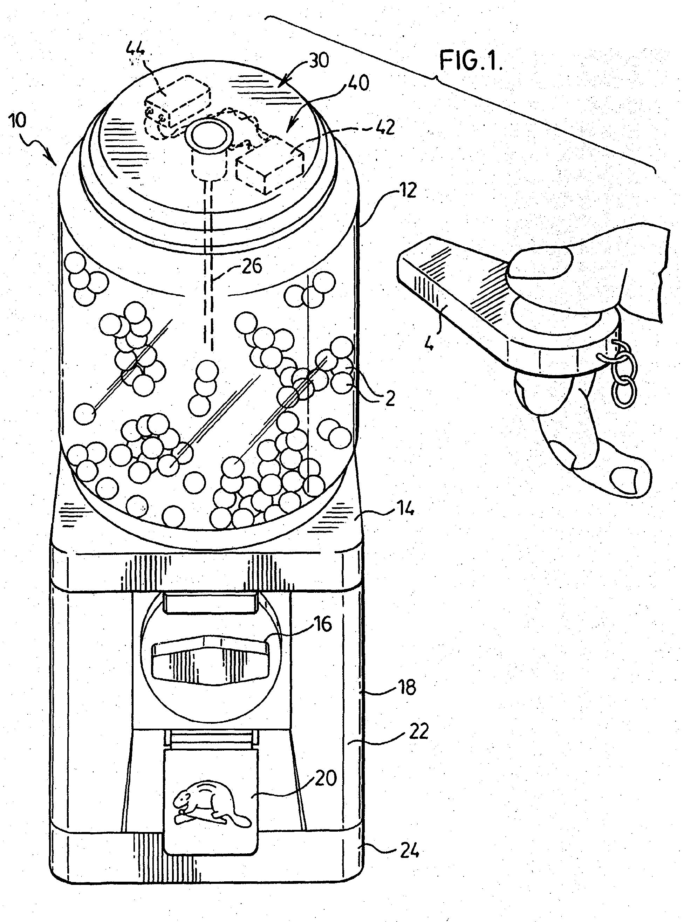

Figure 1 illustrates a bulk vender 10 according to an embodiment of the invention. A transparent merchandise bin 12, often referred to as a "globe", is seated over a hopper 14. The hopper 14 contains a dispensing wheel with product carriers or recesses (not shown) that, as the coin mechanism 16 is rotated, convey single items or small batches of product from the merchandise bin to a covered dispensing opening (not shown). Product stored in the merchandise bin 12, for example gumballs 2, is thus dispensed to the user through a dispensing chute (concealed behind door 20) which is contained within a secure compartment defined within the housing 22. A cash box (not shown) for collecting coins inserted into the coin mechanism 16 is contained within the secure compartment, and the housing 22 is in turn mounted on a base 24.

A lid 30 for closing the merchandise bin 12 is engaged to a center rod 26 which has opposed threaded ends. One threaded end is engaged to a boss in the base 24, and the other threaded end is disposed near the top of the merchandise bin 12 for engaging the lid 30. In a conventional bulk vender, the lid 30 is engaged to the center rod 26 by a cylinder lock which is inserted into a recess in the lid 30 and, when the key is rotated, threads onto the upper threaded end of the center rod 26. The bulk vender thus described is well known to those skilled in the art.

According to an embodiment of the present invention, a locking mechanism 40 is provided, for engaging the lid to the upper threaded end 26a of the center rod 26. The locking mechanism 40 preferably engages to the center rode 26 automatically when the lid 30 is depressed onto the rim 12a of the merchandise bin 12, and is released to a signal from a remote control transmitter 4 (shown in Figure 1). The components of the locking mechanism 40 are preferably affixed to the underside of the lid 30.

The remote control transmitter 4 transmits a radio frequency (rf) signal at a preset frequency, which is received by a receiver 42. Preferably the remote control transmitter 4 transmits an authorization code which is received by receiver 42. If the authorization code is recognized as an authorization code that has been pre-programmed into a code-recognition device integrated into the receiver 42 (or an accompanying external code-recognition device, not shown), the receiver switches a power source, in the preferred embodiment a battery 44, to actuate a solenoid 50, which releases the locking mechanism 40 in the manner described in detail below. The power source could alternatively be a mains power supply, however for maximum versatility in locating the bulk vender for vending it is advantageous to utilize a portable power source.

The locking mechanism 40 could be designed to unlock responsive to merely receiving a signal at a characteristic frequency, or a series of signals at different frequencies, however this will not provide the same security advantages as transmitting an authorization code because it would limit the number of variations - comparable to configurations of the "key" in a mechanical lock - that will unlock the locking mechanism 40. Transmitter/receiver devices which operate by the transmission of digital codes are well known, for example being commonly used in automobiles and the like. These same devices can be applied to the locking mechanism 40 of the present embodiments.

The solenoid 50 comprises a solenoid coil 52 and a plunger, which is biased to an extended position when the solenoid coil 52 is quiescent and moved to a retracted position when the solenoid coil 52 is energized.

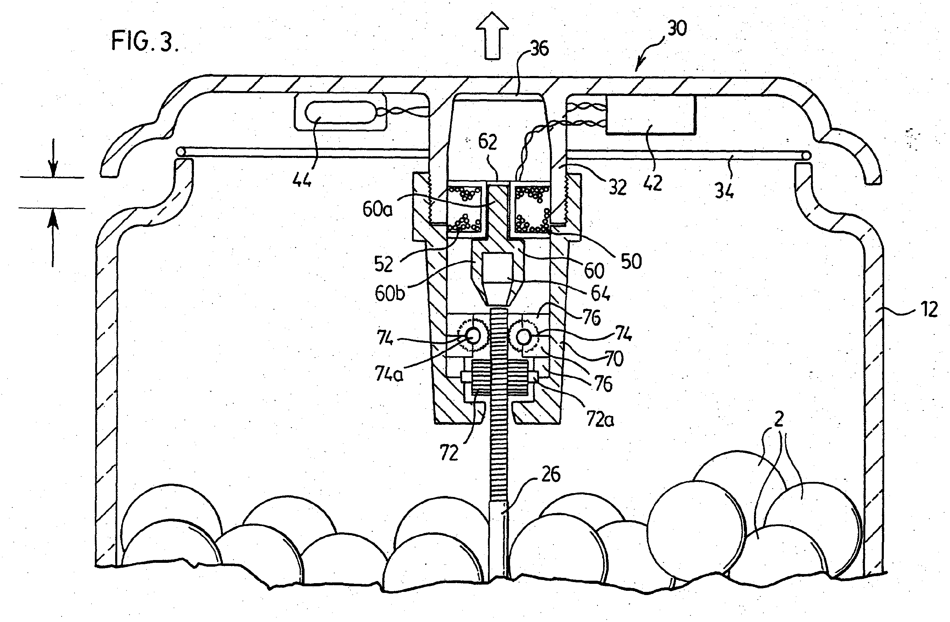

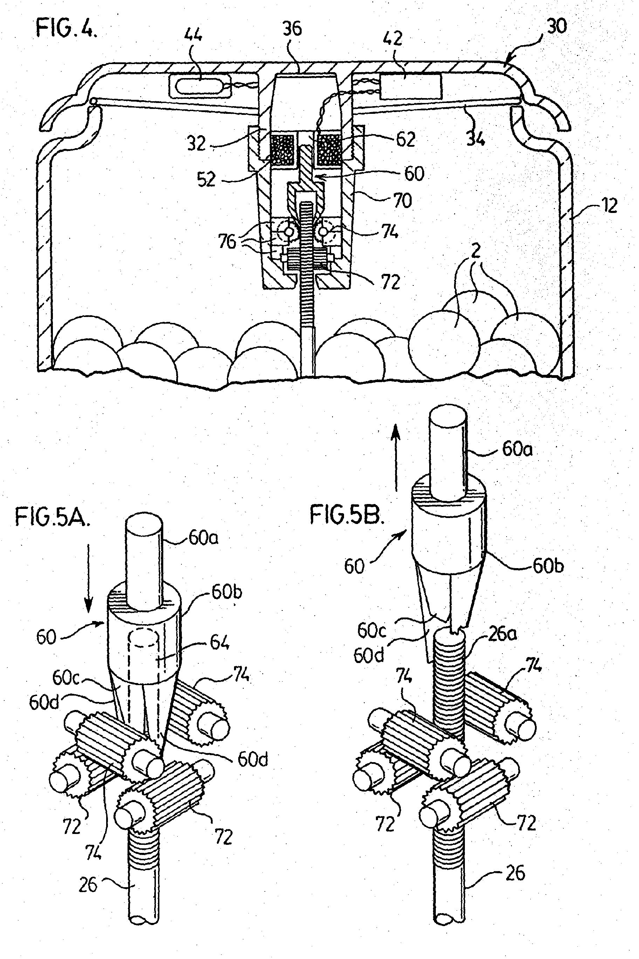

In a first embodiment of the engaging mechanism, illustrated in figures 3 to 7, a plunger 60 has a shank 60a nested within the solenoid coil 52, and a head 60b projecting from the shank 60a. The plunger 60 may be biased to the extended position shown in Figure 4 by any suitable resilient element, for example a light density foam plug 62 disposed behind the shank 60a within the solenoid coil 52, or by any other suitable means.

The solenoid coil 52 is affixed to a solenoid housing 32, which is preferably formed integrally with the lid 30 and provided with a threaded exterior surface for attaching a roller housing 70. The roller housing 70 in turn contains engaging elements comprising at least one pair of opposed rollers 72, preferably two pairs of opposed rollers 72, 74 oriented orthogonally with respect to one another, as shown. The rollers 72, 74 are provided with ribs or teeth dimensioned to engage the threads about the threaded end 26A of the center rod 26, and are rotatably mounted within the roller housing 70, for example via axles 72a, 74a, respectively. The axles 72a, 74a are engaged in axle blocks 76, which are essentially annular washers with half-round recesses formed for trapping the axles 72a, 74a. The axle blocks 76 are stacked in layers, so that the respective rollers 72, 74 can be mounted into the roller housing 70 layer-by-layer. For example roller 72 is mounted to opposed half-round recesses formed in the lower portion of roller housing 70, and axle block 76 having complementary half-round recesses is placed over rollers 72 to trap them in position; another axle block 76 containing half-round recesses in its lower surface aligned with axles 72a and opposed half-round recesses in its upper surface aligned with axles 74a, is laid over the lowest axle block 76, rollers 74 are dropped into position with the axles 74a in the half-round recesses, and finally an upper axle block 76 with half-round recesses in its lower surface aligned with axles 74a is placed over top to trap rollers 74 in place.

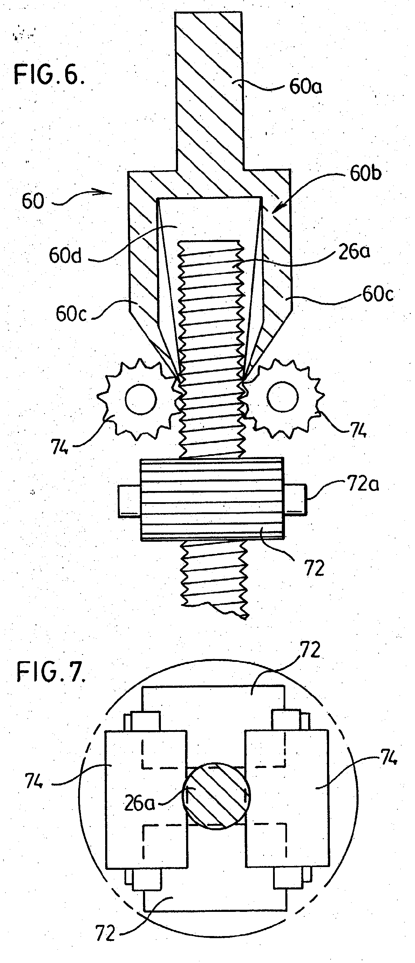

The rollers 72, and likewise the rollers 74, are spaced apart relative to one another sufficiently to allow the threaded end 26a of the center rod 26 to pass between the rollers 72 and 74 when the rollers are able to roll freely, with the teeth of the rollers 72, 74 engaging the threads on the threaded end 76a, as shown in Figure 6. Preferably the teeth are disposed at the same pitch as the threads, as shown in Figure 6. Thus, to lock the center rod 26 to the engaging means, it is simply necessary to prevent the rollers 74 from rotating.

This is effected by extending the solenoid plunger head 60b, which in the extended position interferes with the rotation of the rollers 72, 74. In the preferred embodiment the plunger head 60b comprises a pair of opposed fingers 60c and a longer pair of opposed fingers 60d surrounding a recess or bore 64, which allows the solenoid head 60b to fit over the threaded end 26a of the center rod 26. The tips of shorter fingers 60c engages the rollers 74 at the same time as the tips of longer fingers 60d engage the rollers 72. The tip 60c and extension fingers 60d lock into the teeth of the rollers 74 and 72, respectively, and prevent the rollers 72, 74 from turning in the disengaging direction.

Thus, extension of the plunger 60 simultaneously prevents the rotation of both roller pairs 72, 74 in the disengaging direction, to prevent the roller assembly (and thus the lid 30) from being disengaged from the center rod 26. By retracting the solenoid 60 (in the preferred embodiment responsive to the receiver 42 sensing a signal containing the programmed authorization code), the plunger head 60b is withdrawn from the threaded end 26a of the center rod 26, so that the rollers 72, 74 are free to rotate in the disengaging direction and the lid 30 can then be freely removed from the merchandise storage bin 12.

The locking principle used in this embodiment will operate with only one pair of opposed rollers, in which case one pair of fingers 60c or 60d would be unnecessary. However, the contact area between the thread on the end 26a of the center rod 26 and the rollers is increased by having two pairs of rollers 72 and 74, and the engagement of the roller assembly to the center rod 26 is therefore more secure. In either case the solenoid plunger 60 should be mounted in a manner which prevents its rotation, so that the fingers 60c, 60d remained aligned with their respective rollers 74, 72.

In the preferred embodiment the lid 30 is provided with a spring 34, which biases the lid 30 to the slightly raised position illustrated in Figure 3. Thus, upon release of the locking mechanism 40 the lid 30 automatically opens to a raised position, both facilitating its removal and providing a visual indication that the unlocking operation has been successful.

In the operation of the above-described embodiment of the locking mechanism 40, the vender 10 is located for vending, for example in a malt or other public area. The merchandise bin 12 is filled with merchandise by service personnel and the lid 30 is depressed onto the top of the merchandise bin 12, loading the spring 34. As the lid 30 is depressed onto the merchandise bin 12, the rollers 72, 74 engage the threads on the end 26a of the center rod 26 and roll down the rod 26. The solenoid plunger head 60b, which is biased to the extended position by foam block 62, extends over the threaded end 26a of the center rod 26 such that the shorter fingers 60c and longer fingers 60d simultaneously contact the rollers 74, 72, as illustrated in Figure 6. This does not prevent the rollers 72, 74 from rotating onto the rod 26 to the fully. engaged position, as the roller teeth readily push the plunger 60 out of the way (slightly in the retracting direction) as the roller assembly progresses down the threads on the rod 26 until the lid reaches the closed position shown in Figure 4. However, the shorter fingers 60c and longer fingers 60d prevent the rollers 72, 74 from rotating in the disengaging direction, by wedging between the roller teeth and the threads of the center rod 26, as shown in Figure 6, blocking the roller teeth from meshing with the thread. The teeth of the rollers 74 are thus firmly engaged into the threads about the threaded end 26a of the center rod 26, preventing the roller housing 70, and consequently the lid 30, from being disengaged from the center rod 26.

When it is time to service the vender 10, for example to remove deposited coins and/or replenish or change merchandise in the merchandise bin 12, service personnel activates a compatibly programmed remote control 4, as illustrated in Figure 1. This transmits a signal at the preset frequency, in the preferred embodiment having the authorization code recognized by the locking mechanism 40 in the vender 10. The receiver 42 receives the signal and, comparing the code contained within the signal to determine that it matches the pre-programmed authorization code within the receiver 42, switches power from the battery 44 to the solenoid coil 52. Energization of the solenoid coil 52 causes the solenoid plunger 60 to retract. As the plunger head 60b recedes and the fingers 60c, 60d lose contact with the rollers 74, 72, respectively, the rollers 72, 74 are able to rotate freely and the loaded spring 34 releases its energy and raises the lid 30, as shown in Figure 3.

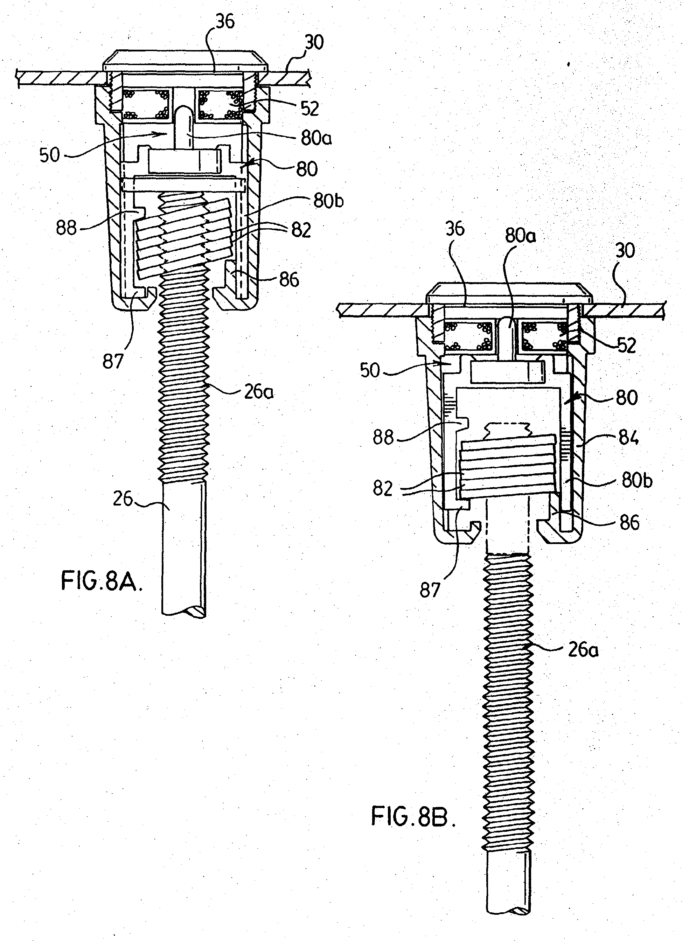

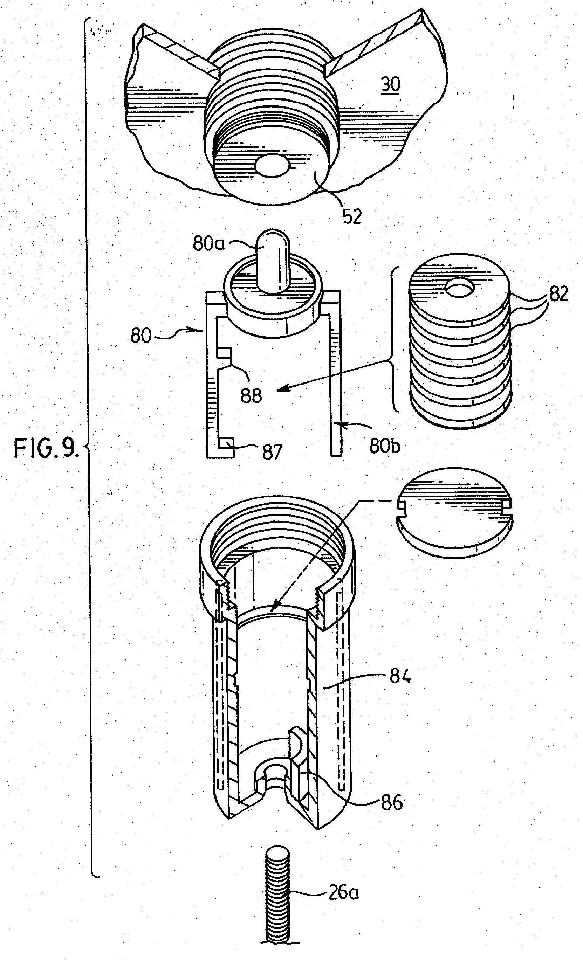

In a further embodiment of the engaging mechanism, illustrated in Figures 8 and 9, a solenoid plunger 80 has a shank 80a, and a plunger head 80b configured as a cylinder containing engaging elements comprising a plurality of washers 82. The cylindrical head 80b is contained within a housing 84 having a return flange or finger 86 disposed along its bottom, to hold on side of the column of washers 82 in a raised position. The interior of the plunger head 80b is provided with a rib or boss 88 in opposition to the flange 86, and disposed axially from the flange 86 a sufficient distance to accommodate the washers 82 laying flat, as shown in Figure 8B. When the washers 82 lay flat, the threaded end 26b of the center rod 26 can pass freely through the washers 82. As the solenoid plunger 80 is extended, the axial distance between the rib 88 and the flange 86 decreases, so that the washers 82 can no longer lay flat and thus take on an oblique angle, as illustrated in Figure 8A, at which angle the washers 82 trap the threads of the threaded end 26a of the center rod 26. Thus, in this embodiment the washers 82 engage the threaded end 26a when the solenoid 50 is quiescent and the plunger 80 is in the engaged (extended) position. When the solenoid coil 52 is energized, the solenoid plunger 80 is retracted into the solenoid coil 52, and a lip 87 at the lower end of the plunger head 80b lifts the washers 82 back to a generally level orientation, releasing the threaded end 26a and disengaging the lid 30. The operation of this embodiment is otherwise as described in connection with the previous embodiment.

In both embodiments, preferably a steel or other magnetically permeable plate 36 is disposed between the solenoid 50 and the lid 30, to prevent unauthorized retraction of the solenoid plunger by placing a magnet on top of the lid 30 over the position of the solenoid 50.

It is also possible to program the locking mechanisms of a group of venders 10 with the same authorization code, so that activating the remote control simultaneously opens a batch of bulk venders 10, for example in a vending machine island.

Various embodiments of the present invention having been thus described in detail by way of example, it will be apparent to those skilled in the art that variations and modifications may be made without departing from the invention. The invention includes all such variations and modifications.

Features of the invention which are considered inventive are set out in the following numbered clauses:
1. A bulk vender having a merchandise bin with a removable lid and an anchoring member fixed in relation to the merchandise bin, comprising
   an engaging member fixed to the lid and actuated by a solenoid, for engaging the anchoring member when the solenoid is in one of a quiescent or an activated condition and disengaging from the anchoring member when the solenoid is in the other of the quiescent or the activated condition,.
   a power source for energizing the solenoid, and
   a receiver for connecting the power source to the solenoid or disconnecting the power source from the solenoid responsive to a signal from a transmitter,
   whereby when the receiver recognizes a signal from the transmitter the solenoid is switched to disengage the engaging mechanism from the anchoring member.
2. The bulk vender of clause 1 wherein the signal contains a code and the signal is recognized by the receiver only when the code matches a code programmed into the receiver.
3. The bulk vender of clause 1 wherein engaging mechanism has at least one engaging element interlocking with a threaded portion of the anchoring member and the solenoid in the quiescent condition interferes with the disengagement of the engaging element from the threaded portion.
4. The bulk vender of clause 3wherein the anchoring member is a center rod affixed to a base of the vender.
5. The bulk vender of clause 4wherein the merchandise bin is disposed over a hopper containing a dispensing wheel having product carriers for conveying product to a dispensing opening for dispensing to a user responsive to rotation of a coin mechanism.
6. The bulk vender of clause 3wherein the engaging element comprises at least one roller having teeth for engaging the threaded portion, and the solenoid comprises a plunger having at least one finger impinging into the teeth of the roller when the solenoid is in the quiescent condition.
7. The bulk vender of clause 6wherein the engaging element comprises at least one pair of opposed rollers and at least one pair of opposed fingers.
8. The bulk vender of clause 6wherein the engaging element comprises at least one washer movable by the solenoid between an oblique position engaging the threaded portion and a generally horizontal position disengaged from the threaded portion.
9. A removable lid for a bulk vender having a merchandise bin, comprising
   an engaging member fixed to the lid and actuated by a solenoid, for engaging an anchoring member disposed in the merchandise bin when the solenoid is in one of a quiescent or an activated condition and disengaging from the anchoring member when the solenoid is in the other of the quiescent or the activated condition,
   a power source for energizing the solenoid, and
   a receiver for connecting the power source to the solenoid or disconnecting the power source from the solenoid responsive to a signal from a transmitter,
   whereby when the receiver recognizes a signal from the transmitter the solenoid is switched to disengage the engaging mechanism from the anchoring member.
10. The bulk vender of clause 9wherein the signal contains a code and the signal is recognized by the receiver only when the code matches a code programmed into the receiver.
11. The bulk vender of clause 9wherein engaging mechanism has at least one engaging element interlocking with a threaded portion of the anchoring member and the solenoid in the quiescent condition interferes with the disengagement of the engaging element from the threaded portion.
12. The bulk vender of clause 11 wherein the anchoring member is a center rod affixed to a base of the vender.
13. The bulk vender of clause 12 wherein the merchandise bin is disposed over a hopper containing a dispensing wheel having product carriers for conveying product to a dispensing opening for dispensing to a user responsive to rotation of a coin mechanism.
14. The bulk vender of clause 11 wherein the engaging element comprises at least one roller having teeth for engaging the threaded portion, and the solenoid comprises a plunger having at least one finger impinging into the teeth of the roller when the solenoid is in the quiescent condition.
15. The bulk vender of clause 14wherein the engaging element comprises at least one pair of opposed rollers and at least one pair of opposed fingers.
16. The bulk vender of clause 14wherein the engaging element comprises at least one washer movable by the solenoid between an oblique position engaging the threaded portion and a generally horizontal position disengaged from the threaded portion.
17. A lock for a bulk vender having a merchandise bin with a removable lid, comprising
   an engaging member fixed to the lid and actuated by a solenoid, for engaging an anchoring member disposed in the merchandise bin when the solenoid is in one of a quiescent or an activated condition and disengaging from the anchoring member when the solenoid is in the other of the quiescent or the activated condition,
   a power source for energizing the solenoid, and
   a receiver for connecting the power source to the solenoid or disconnecting the power source from the solenoid responsive to a signal from a transmitter,
   whereby when the receiver recognizes a signal from the transmitter the solenoid is switched to disengage the engaging mechanism from the anchoring .. member.
18. The bulk vender of clause 17wherein the signal contains a code and the signal is recognized by the receiver only when the code matches a code programmed into the receiver.
19. The bulk vender of clause 17wherein engaging mechanism has at least one engaging element interlocking with a threaded portion of the anchoring member and the solenoid in the quiescent condition interferes with the disengagement of the engaging element from the threaded portion.
20. The bulk vender of clause 19wherein the anchoring member is a center rod affixed to a base of the vender.
21. The bulk vender of clause 20wherein the merchandise bin is disposed over a hopper containing a dispensing wheel having product carriers for conveying product to a dispensing opening for dispensing to a user responsive to rotation of a coin mechanism.
22. The bulk vender of clause 19wherein the engaging element comprises at least one roller having teeth for engaging the threaded portion, and the solenoid comprises a plunger having at least one finger impinging into the teeth of the roller when the solenoid is in the quiescent condition.
23. The bulk vender of clause 22 wherein the engaging element comprises at least one pair of opposed rollers and at least one pair of opposed fingers.
24. The bulk vender of clause 22 wherein the engaging element comprises at least one washer movable by the solenoid between an oblique position engaging the threaded portion and a generally horizontal position disengaged from the threaded portion.

## Claims

1. A removable lid for a bulk vender having a merchandise bin, comprising
an engaging member fixed to the lid and actuated by a solenoid, for engaging an anchoring member disposed in the merchandise bin when the solenoid is in one of a quiescent or an activated condition and disengaging from the anchoring member when the solenoid is in the other of the quiescent or the activated condition,
a power source for energizing the solenoid, and
a receiver for connecting the power source to the solenoid or disconnecting the power source from the solenoid responsive to a signal from a transmitter,
whereby when the receiver recognizes a signal from the transmitter the solenoid is switched to disengage the engaging mechanism from the anchoring member.

2. The removable lid of claim 1 wherein the signal contains a code and the signal is recognized by the receiver only when the code matches a code programmed into the receiver.

3. The removable lid of claim 1 wherein engaging mechanism has at least one engaging element interlocking with a threaded portion of the anchoring member and the solenoid in the quiescent condition interferes with the disengagement of the engaging element from the threaded portion.

4. The removable lid of claim 3 wherein the anchoring member is a center rod affixed to a base of the vender.

5. The removable lid of claim 4 wherein the merchandise bin is disposed over a hopper containing a dispensing wheel having product carriers for conveying product to a dispensing opening for dispensing to a user responsive to rotation of a coin mechanism.

6. The removable lid of claim 3 wherein the engaging element comprises at least one roller having teeth for engaging the threaded portion, and the solenoid comprises a plunger having at least one finger impinging into the teeth of the roller when the solenoid is in the quiescent condition.

7. The removable lid of claim 14 wherein the engaging element comprises at least one pair of opposed rollers and at least one pair of opposed fingers.

8. The removable lid of claim 14 wherein the engaging element comprises at least one washer movable by the solenoid between an oblique position engaging the threaded portion and a generally horizontal position disengaged from the threaded portion.

9. A bulk vender comprising the removable lid of claim 1.

10. A lock for a bulk vender having a merchandise bin with a removable lid, comprising
an engaging member fixed to the lid and actuated by a solenoid, for engaging an anchoring member disposed in the merchandise bin when the solenoid is in one of a quiescent or an activated condition and disengaging from the anchoring member when the solenoid is in the other of the quiescent or the activated condition,
a power source for energizing the solenoid, and
a receiver for connecting the power source to the solenoid or disconnecting the power source from the solenoid responsive to a signal from a transmitter,
whereby when the receiver recognizes a signal from the transmitter the solenoid is switched to disengage the engaging mechanism from the anchoring member.
